# EUROPÄISCHE PATENTSCHRIFT

(11) **EP 2 839 411 B1**
(45) Veröffentlichungstag und Bekanntmachung des Hinweises auf die Patenterteilung: **04.05.2016**
(21) Anmeldenummer: 13740220.2
(22) Anmeldetag: 05.07.2013
(51) Int. Cl.: G06K 19/07, H04B 3/54, H04J 3/12, H04Q 9/08

(54) **VERFAHREN UND ANORDNUNG ZUR ÜBERTRAGUNG VON DATEN ÜBER EINEN ELEKTRISCHEN LEITER EINES STROMNETZES**
METHOD AND ARRANGEMENT FOR TRANSMITTING DATA VIA AN ELECTRIC CONDUCTOR OF A CURRENT NETWORK
PROCÉDÉ ET SYSTÈME DE TRANSMISSION DE DONNÉES SUR UN CONDUCTEUR ÉLECTRIQUE D'UN RÉSEAU

(30) Priorität: 09.07.2012 DE 102012211916
(43) Veröffentlichungstag der Anmeldung: 25.02.2015
(73) Patentinhaber: Siemens Aktiengesellschaft, 80333 München (DE)
(72) Erfinder: HÜTTNER, Jörg, 95028 Hof (DE); KURZ, Fabian, 81825 München (DE); METZ, Gerhard, 81379 München (DE); ZIROFF, Andreas, 80469 München (DE)
(86) Internationale Anmeldenummer: PCT/EP2013/064212
(87) Internationale Veröffentlichungsnummer: WO 2014/009260

(56) Entgegenhaltungen:
- US-A1- 2008 303 344
- Richard Mcwilliam: "Electronic Identification Systems for Asset Management", Durham Theses, 1. März 2003 (2003-03-01), Seiten 1-362, XP55083177, Durham, UK Gefunden im Internet: URL:http://etheses.dur.ac.uk/3697/1/3697_1 258.pdf [gefunden am 2013-10-09]

## Beschreibung

Die vorliegende Erfindung betrifft ein Verfahren und eine Anordnung zur Übertragung von Daten über einen elektrischen Leiter eines Stromnetzes.

Powerline Communication (PLC) bezeichnet die Übertragung von Daten über elektrische Leiter. Dabei werden elektrische Leiter, beispielsweise Stromleitungen im Haus- und Zugangsbereich, gleichzeitig zur Energieübertragung und zur Datenübertragung genutzt.

Anwendungsszenarien für PLC umfassen die Anbindung von Haushalten an das Internet und Heimnetzwerke mit Datenraten im zweistelligen Megabitbereich, aber auch Mess-, Steuer- und Regelanwendungen in verschiedenen Umfeldern wie beispielsweise intelligentes Stromnetz (Smart Grid) oder Sensoranwendungen in Verteilerstationen.

Für Mess-, Steuer- und Regelanwendungen sind im Allgemeinen geringe Datenraten ausreichend. Je nach Umfeld können jedoch besondere Anforderungen an die Sicherheit und Robustheit einer derartigen Anwendung gelten. Sicherheit und Robustheit stellen beispielsweise für die Energieversorgung kritische Kriterien dar, wenn eine Sensorfunktion auch bei Ausfall der Netzspannung weiterhin gewährleistet sein muss. Zudem ist in vielen Umfeldern ein geringer Wartungsaufwand von Bedeutung, um beispielsweise Kosten zu sparen.

Dabei existiert eine Reihe von konkurrierenden Standards zur Kommunikation auf Stromleitungen, insbesondere für Niederspannungs- und Mittelspannungs-Leitungen, die eine Datenübertragung mit geringen und mittleren Datenraten ermöglichen. Beispiele sind Spread Frequency Shift Keying (S-FSK), Differential Code Shift Keying (DCSK), G3, PRIME und G.hnem. Diese Standards arbeiten mit verschieden komplexen Modulationsarten im Langwellenbereich wie beispielsweise FSK, Spread-Spectrum oder Orthogonal Frequency Division Multiplexing (OFDM). In Europa arbeiten diese Standards meist im so genannten CENELEC-Band unter 148,5 kHz und erreichen Datenraten bis zu 128 kbit/s, meist jedoch liegen die verwendeten Raten im einstelligen Kilobit-Bereich. Entsprechende Systeme sind auf der physikalischen Ebene symmetrisch, das heißt sie verfügen in der Regel pro Kommunikationsendpunkt über einen Sender und einen Empfänger in einer Einheit, dem Transceiver. Transceiver kommunizieren miteinander über den sie verbindenden Kanal. Der Energiebedarf von solchen, dem Stand der Technik entsprechenden Systemen, liegt typischerweise bei einigen zehn Milliwatt. Auf Niederspannungsleitungen ist eine Versorgung direkt von der Netzspannung möglich, zumindest solange diese Netzspannung anliegt. Auf Mittelspannungsleitungen, bei denen das Signal oft auf der Schirmung der Leitung transportiert wird, ist hingegen eine externe Versorgung notwendig, beispielsweise aus Batterien, die jedoch eine begrenzte Lebensdauer haben und somit einen erhöhten Wartungsaufwand bedeuten.

Zudem benötigen Systeme, die den genannten Standards entsprechen, Vorrichtungen hoher technischer Komplexität, die beispielsweise in entsprechenden Chipsätzen implementiert werden muss. Derartige Chipsätze benötigen eine komplexe Konfiguration sowie eine eigene Stromversorgung, so dass solche Lösungen zumindest für einfache Sensoranwendungen uninteressant sind.

Richard Mcwilliam offenbart in "Electronic Identification Systems for Asset Management" eine Übersicht über die Möglichkeit von Direktlastmodulation über Energieleitungen.

US 2008/303344 A1 offenbart ein Energieleitungskommunikationssystem. In diesem werden Vorrichtungen mit mehreren elektrischen Energieleitungen verbunden. Eine Mastervorrichtung ist mit einer dieser Energieleitungen verbunden.

Es ist eine Aufgabe der vorliegenden Erfindung, ein verbessertes Verfahren und eine verbesserte Anordnung zur Übertragung von Daten über einen elektrischen Leiter eines Stromnetzes zu schaffen.

Demgemäß wird ein Verfahren zur Übertragung von Daten über einen elektrischen Leiter eines Stromnetzes vorgeschlagen. An den elektrischen Leiter sind zumindest ein erster Knoten und zumindest ein zweiter Knoten durch eine Koppelung mittels jeweils einer impedanztransparenten Koppeleinrichtung gekoppelt. Das Verfahren umfasst die Schritte Senden eines Trägersignals über den elektrischen Leiter durch den ersten Knoten; Gleichrichten des gesendeten Trägersignals an dem zweiten Knoten zur Energieversorgung des zweiten Knotens; und Modulieren des gesendeten Trägersignals durch den zweiten Knoten mittels einer Lastmodulation zum Übertragen von Antwortdaten an den ersten Knoten.

Das Stromnetz lässt sich durch ein vereinfachtes Modell darstellen, bestehend aus dem elektrischen Leiter, Längskomponenten der Anschlussleitungen des ersten Knotens und des zweiten Knotens sowie einer Querkomponente, die als konzentriertes Bauelement die Netzzugangsimpedanz modelliert.

Die Koppelung erfolgt durch jeweils einen Koppler oder eine Koppeleinrichtung. Auf der Betriebsfrequenz, beispielsweise im so genannten CENELEC-Band von 3 bis 148,5 kHz, muss ein derartiger Koppler impedanz-transparent sein, das heißt eine Änderung der Impedanz auf einer Seite, beispielsweise auf der Seite des zweiten Knotens, muss der gleichen Änderung der Impedanz auf der anderen Seite, beispielsweise auf der Seite des ersten Knotens, im Verhältnis 1:N/M entsprechen. Dies ist beispielsweise durch die Verwendung von Serienresonanzschaltungen möglich.

Durch die Verwendung derartiger Koppler werden der erste und der zweite Knoten durch Entkopplung von der Netzspannung geschützt. Weiterhin ermöglichen die Koppler eine Lastmodulation zur Übertragung von Daten. Aufgrund der Impedanzverhältnisse auf typischen Nieder- und Mittelspannungsnetzen ist eine Impedanztransformation notwendig, die durch derartige Koppler erfolgen kann.

Der erste Knoten ist insbesondere als ein Lesegerät ausgebildet. Der zweite Knoten ist beispielsweise als Transponder ausgebildet. Ein derartiger Transponder umfasst eine Einrichtung zur Modulation des Trägersignals zur Übertragung von Antwortdaten an das Lesegerät, beispielsweise durch Amplituden- oder Phasenmodulation. Der Transponder kann zusätzlich zu den Antwortdaten eine eindeutige Identifikation (ID) in das modulierte Trägersignal kodieren. Weiterhin umfasst der Transponder eine Schaltung zur Gleichrichtung des vom ersten Knoten gesendeten Trägersignals zur Energiegewinnung, so dass der Transponder keine externe Energieversorgung benötigt. Weiterhin kann der Transponder einen Speicher für die eindeutige ID und gegebenenfalls für weitere Daten sowie ein Rechenwerk zur Generierung einer Modulationssequenz umfassen. Je nach Verwendung des Transponders kann ein solcher zweiter Knoten oder Transponder weitere Komponenten umfassen, beispielsweise Sensoren zur Erfassung von Messwerten.

Als Lastmodulation wird die Rückwirkung einer Laständerung im Transponder auf die Amplitude oder Phase des vom Lesegerät gesendeten Trägersignals verstanden. Der Transponder leitet die Laständerung ein. Das Lesegerät kann die in der Laständerung kodierten Antwortdaten erkennen und auslesen.

Das Verfahren ermöglicht es, Daten über einen elektrischen Leiter an und von Knoten wie beispielsweise Transponder geringer Komplexität zu übertragen. Insbesondere benötigt ein derartiger Knoten oder Transponder keine eigene Energieversorgung und ist damit besonders sicher und robust, beispielsweise für den Fall, dass die Netzspannungsversorgung ausfällt. Weiterhin ist ein derartiger Knoten oder Transponder aufgrund seiner geringen bautechnischen Komplexität praktisch wartungsfrei zu betreiben.

Ein weiterer Vorteil besteht darin, dass für einen derartigen Knoten oder Transponder Bausteine herkömmlicher drahtloser Identifikationssysteme wie beispielsweise RFID-Chips verwendet werden können, die kostengünstig in großen Stückzahlen verfügbar sind. Das Verfahren eignet sich insbesondere für wartungsarme und kostengünstige Sensor-Anwendungen.

Die klassische Kommunikationsstrecke, in der jeder Sender aktiv Energie auf den Übertragungskanal einspeist, wird in dem vorgeschlagenen Verfahren durch die Verwendung der Lastmodulation umgangen. Dies wird durch ein spezielles Design der Ankopplung an das Übertragungsmedium ermöglicht, welches die Laständerungen an der Transponder-Seite unbeschadet zum Lesegerät überträgt. Damit wird es möglich, eine Kommunikation zu einem Endpunkt zu betreiben, der über eine sehr geringe Komplexität und keine eigene Energieversorgung verfügt und somit praktisch wartungsfrei betrieben wird.

Ein weiterer Vorteil des vorgeschlagenen Verfahrens liegt in der Möglichkeit, den Transponder potentialfrei beispielsweise über einen induktiven Koppler ankoppeln zu können. Eine zusätzliche Energieversorgung des Transponders ist nicht notwendig.

Ein zusätzlicher Vorteil des vorgeschlagenen Verfahrens besteht darin, dass Bausteine gängiger drahtloser Identifikationssysteme benutzt werden können. Insbesondere auf der Sensorseite sind somit sehr günstige Bauelemente verfügbar.

Bei Ausführungsformen umfasst das Verfahren ferner ein Demodulieren des mittels der Lastmodulation modulierten Trägersignals durch den ersten Knoten zum Empfangen der Antwortdaten.

Der erste Knoten kann auch als Lesegerät für Antwortdaten betrachtet werden, die von einem Sensor oder Schalter in Form beispielsweise eines Transponders übertragen werden. Das Lesegerät erzeugt das Trägersignal beispielsweise in Form eines Sinus-Signals im Langwellenbereich und demoduliert die durch Laständerung am Transponder auftretende Amplituden- oder Phasenmodulation.

Somit ist es möglich, dem ersten Knoten über den elektrischen Leiter Antwortdaten beispielsweise von einem als Sensor oder Schalter ausgebildeten Knoten oder Transponder zu übermitteln.

Bei weiteren Ausführungsformen des Verfahrens wird eine Entfernung zwischen dem ersten Knoten und dem zweiten Knoten in Abhängigkeit des Empfangens der Antwortdaten ermittelt. Zweckmäßig wird diese Entfernung mittels einer Laufzeitmessung, also mittels einer Messung einer Signallaufzeit, ermittelt.

Dabei wird beispielsweise die Laufzeit des gesendeten Trägersignals ab dem Zeitpunkt des Sendens gemessen, die verstreicht, bis das vom zweiten Knoten modulierte Trägersignal am ersten Knoten eintrifft. Unter Berücksichtigung der physikalischen Eigenschaften des elektrischen Leiters ist so eine einfache und kostengünstige Entfernungsmessung im Stromnetz aus der Ferne möglich.

Bei weiteren Ausführungsformen umfasst das Verfahren ferner ein Modulieren des gesendeten Trägersignals durch einen weiteren zweiten Knoten mittels einer weiteren Lastmodulation zum Übertragen von weiteren Antwortdaten an den ersten Knoten.

Dies ermöglicht den Einsatz einer beliebigen Anzahl von Knoten oder Transpondern beispielsweise als Sensoren oder Schalter im Stromnetz. Jeder Sensor oder Schalter kann dabei durch eine ihn charakterisierende Lastmodulation eindeutig identifiziert werden.

Bei weiteren Ausführungsformen umfasst das Verfahren ferner ein Demodulieren des mittels der weiteren Lastmodulation modulierten Trägersignals durch den ersten Knoten zum Empfangen der weiteren Antwortdaten.

Auf diese Weise können die Antwortdaten der verschiedenen Knoten oder Transponder wie beispielsweise Sensoren oder Schalter im Stromnetz vom ersten Knoten empfangen und verwendet werden.

Bei weiteren Ausführungsformen des Verfahrens wird eine Entfernung zwischen dem zweiten Knoten und dem weiteren zweiten Knoten in Abhängigkeit des Empfangens der Antwortdaten und der weiteren Antwortdaten ermittelt. Zweckmäßig wird diese Entfernung mittels einer Laufzeitmessung, also mittels einer Messung einer Signallaufzeit, ermittelt.

Dies ermöglicht eine einfache und kostengünstige Entfernungsmessung im Stromnetz aus der Ferne unter Verwendung mehrerer an den elektrischen Leiter gekoppelter Knoten oder Transponder.

Bei weiteren Ausführungsformen des Verfahrens erfolgen die Lastmodulation und die weitere Lastmodulation durch ein Schalten zwischen verschiedenen Belastungsimpedanzen.

Der zweite Knoten oder Transponder schaltet zwischen verschiedenen Belastungsimpedanzen um und ruft somit eine entsprechende Impedanzänderung am Eingang des ersten Knotens hervor.

Bei weiteren Ausführungsformen umfasst das Verfahren ferner ein Modulieren des Trägersignals mittels einer Modulation zum Übertragen von Steuerdaten durch den ersten Knoten.

Somit kann der erste Knoten oder das Lesegerät bei Bedarf Steuerdaten an den Schalter oder Transponder übermitteln. Steuerdaten können beispielsweise Schaltanweisungen für Schalter enthalten, so dass zum Beispiel ein Ein- und Ausschalten oder eine Zeitsteuerung eines an den elektrischen Leiter angeschlossenen Gerätes aus der Ferne möglich ist.

Bei weiteren Ausführungsformen umfasst das Verfahren ferner ein Demodulieren des mittels der Modulation zum Übertragen von Steuerdaten modulierten Trägersignals durch den zweiten Knoten zum Empfangen der Steuerdaten.

Der zweite Knoten oder Transponder kann zu diesem Zweck eine Schaltung zur Demodulation und/oder Dekodierung von Steuerdaten des ersten Knotens umfassen. Somit kann ein Transponder oder Schalter im Stromnetz Steuerdaten des ersten Knotens oder Lesegeräts empfangen und gegebenenfalls umsetzen.

Bei weiteren Ausführungsformen des Verfahrens erfolgt die Koppelung durch die jeweilige impedanztransparente Koppeleinrichtung an den elektrischen Leiter potentialfrei.

Dies geschieht beispielsweise durch Verwendung induktiver Koppler. Derartige Koppler dienen der Isolation zwischen erstem Knoten oder Lesegerät beziehungsweise zweitem Knoten oder Transponder einerseits und der Wechselspannung im Stromnetz andererseits.

Bei weiteren Ausführungsformen des Verfahrens wird das Trägersignal zur Unterdrückung von Störsignalen durch die jeweilige impedanztransparente Koppeleinrichtung gefiltert.

Somit erfolgt eine Filterung des Trägersignals im für die Übertragung relevanten Frequenzbereich hinsichtlich störender Signalanteile. Dies ist potentiell notwendig, da auf dem Übertragungsmedium eine Vielzahl von Störsignalen vorhanden sein kann, deren Unterdrückung zur korrekten Funktion des Verfahrens notwendig ist.

Bei weiteren Ausführungsformen des Verfahrens wird der elektrische Leiter als Hochspannungsleitung oder Höchstspannungsleitung ausgestaltet.

Dies ermöglicht die Übertragung von Daten über einen elektrischen Leiter auch über Hochspannungsleitungen oder Höchstspannungsleitungen.

Bei weiteren Ausführungsformen umfassen die Antwortdaten eine Sensorinformation.

Sensorinformationen können beispielsweise Umweltbedingungen beschreiben, wie Temperatur, Luftfeuchtigkeit oder Luftdruck. Weiterhin können Sensorinformationen Leitungsparameter wie beispielsweise Stromstärke, Impedanz oder Entfernungsangaben beschreiben. Die Sensordaten können durch die Modulation des Trägersignals in das Trägersignal kodiert werden. Dies ermöglicht beispielsweise vielfältige, kostengünstige und wartungsarme Sensor-Anwendungen aus der Ferne.

Weiterhin wird eine Anordnung zur Übertragung von Daten über einen elektrischen Leiter eines Stromnetzes vorgeschlagen. Die Anordnung umfasst einen ersten Knoten und zumindest einen zweiten Knoten, wobei der erste Knoten und der zweite Knoten durch eine Koppelung mittels jeweils einer impedanztransparenten Koppeleinrichtung an den elektrischen Leiter gekoppelt sind, wobei der erste Knoten ein Sendemittel zum Senden eines Trägersignals über den elektrischen Leiter umfasst, wobei der zweite Knoten ein Gleichrichtungsmittel zum Gleichrichten des gesendeten Trägersignals zur Energieversorgung des zweiten Knotens umfasst, und wobei der zweite Knoten ein Modulationsmittel zum Modulieren des gesendeten Trägersignals mittels einer Lastmodulation zum Übertragen von Antwortdaten umfasst.

Das jeweilige Mittel, Sendemittel, Gleichrichtungsmittel und Modulationsmittel, kann hardwaretechnisch und/oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens oder der Anordnung. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein schematisches Ablaufdiagramm eines Ausführungsbeispiels eines Verfahrens zur Übertragung von Daten über einen elektrischen Leiter eines Stromnetzes;
- Fig. 2: ein schematisches Blockschaltbild einer Anordnung zur Übertragung von Daten über einen elektrischen Leiter eines Stromnetzes; und
- Fig. 3: ein schematisches Blockschaltbild eines Ausführungsbeispiels einer Anordnung zur Übertragung von Daten über einen elektrischen Leiter eines Stromnetzes.

In den Figuren sind gleiche oder funktionsgleiche Elemente mit denselben Bezugszeichen versehen worden, sofern nichts anderes angegeben ist.

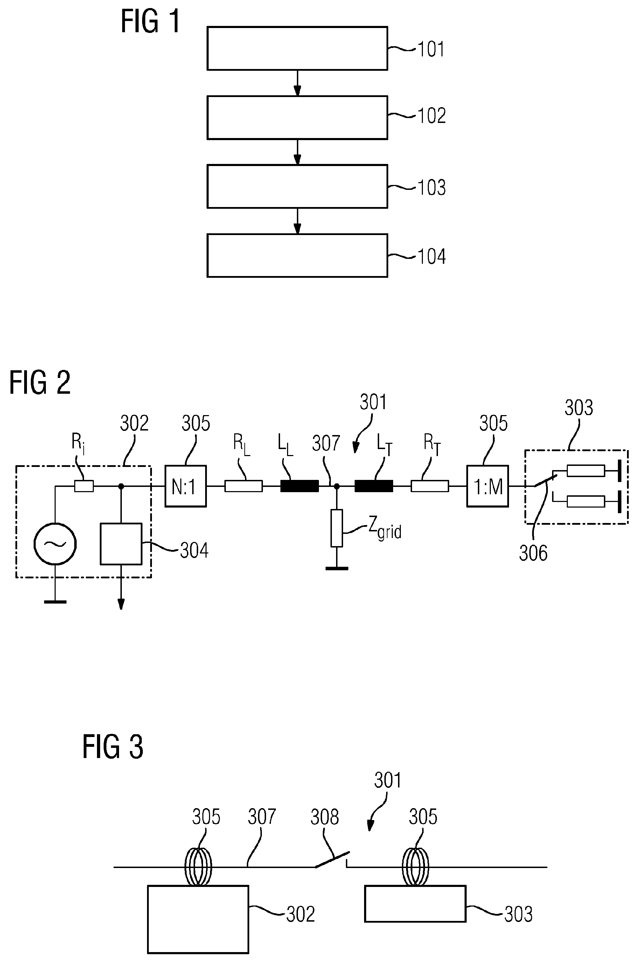

Fig. 1 zeigt ein schematisches Ablaufdiagramm eines Ausführungsbeispiels eines Verfahrens zur Übertragung von Daten über einen elektrischen Leiter 307 eines Stromnetzes. Das Stromnetz und eine entsprechende Anordnung 301 zur Durchführung des Verfahrens sind in Fig. 2 dargestellt.

In einem ersten Schritt erfolgt ein Senden 101 eines Trägersignals über den elektrischen Leiter 307 durch den ersten Knoten 302.

In einem zweiten Schritt erfolgt ein Gleichrichten 102 des gesendeten Trägersignals an dem zweiten Knoten 303 zur Energieversorgung des zweiten Knotens 303.

In einem dritten Schritt erfolgt ein Modulieren 103 des gesendeten Trägersignals durch den zweiten Knoten 303 mittels einer Lastmodulation zum Übertragen von Antwortdaten an den ersten Knoten 302.

In einem vierten Schritt erfolgt ein Demodulieren 104 des mittels der Lastmodulation modulierten Trägersignals durch den ersten Knoten 302 zum Empfangen der Antwortdaten.

Der erste Knoten 302 wird auch als Lesegerät bezeichnet. Die Antwortdaten des zweiten Knotens 303 können alternativ oder zusätzlich auch von einem weiteren Lesegerät 302 im Stromnetz demoduliert werden.

Die Antwortdaten des zweiten Knotens 303 dienen beispielsweise der Ermittlung der Entfernung zwischen dem Lesegerät 302 und dem zweiten Knoten 303.

Der zweite Knoten 303 kann beispielsweise als Transponder, Schalter oder Sensor ausgestaltet sein. Es ist möglich, dass mehrere zweite Knoten 303 das vom Lesegerät 302 gesendete Trägersignal modulieren. Das Lesegerät 302 kann somit beispielsweise weitere Antwortdaten eines weiteren zweiten Knotens 303 demodulieren. Jeder Transponder 303 verwendet dabei eine ihn charakterisierende Lastmodulation. Es ist möglich, eine den jeweiligen Transponder 303 eindeutig identifizierende ID-Nummer in das modulierte Trägersignal zu kodieren.

Für den Fall von zwei zweiten Knoten 303, die Antwortdaten an das Lesegerät 302 übertragen, kann das Lesegerät 302 die Entfernung zwischen den beiden zweiten Knoten 303 ermitteln.

Es ist möglich, dass das Lesegerät 302 das Trägersignal in einem weiteren Schritt moduliert, um Steuerdaten an den zweiten Knoten 303 zu übertragen. Die Steuerdaten können alternativ auch an mehrere oder alle zweiten Knoten 303 im Stromnetz gerichtet sein. Der oder die zweiten Knoten 303 demodulieren in einem weiteren Schritt das zum Übertragen von Steuerdaten modulierte Trägersignal zum Empfangen der Steuerdaten.

Die Kommunikation vom Lesegerät 302 zum Transponder 303, beispielsweise die Übertragung von Steuerdaten vom Lesegerät 302 zum Transponder 303, erfolgt durch Modulation des Trägersignals, die Rückstrecke vom Transponder 303 zum Lesegerät 302, beispielsweise die Übertragung von Antwortdaten vom Transponder 303 zum Lesegerät 302, erfolgt durch Lastmodulation. Dabei sind sämtliche Modulationsarten möglich, beispielsweise Amplitudenmodulation oder Phasenmodulation.

Fig. 2 zeigt ein schematisches Blockschaltbild einer Anordnung 301 zur Übertragung von Daten über einen elektrischen Leiter 307 eines Stromnetzes.

Das Stromnetz umfasst einen elektrischen Leiter 307 mit Längskomponenten R_{L/T}, L_{L/T} der Anschlussleitungen von einem ersten Knoten oder Lesegerät 302 und zweiten Knoten oder Transponder 303 sowie eine Querkomponente Z_{grid}, die als konzentriertes Bauelement die Netzzugangsimpedanz modelliert. Das Lesegerät 302 umfasst eine Einrichtung 304 zur Modulation und Demodulation des Trägersignals. Der Transponder 303 umfasst beispielsweise einen Schalter 306 zur Modulation des Trägersignals. Weiterhin umfasst die Anordnung 301 zwei Koppeleinrichtungen oder Koppler 305, die beispielsweise einerseits die Impedanz am Lesegerät 302 auf das Impedanzniveau des elektrischen Leiters 307 im Verhältnis N:1 heruntertransformieren und beispielsweise andererseits die Leitungsimpedanz im Verhältnis 1:M auf die Impedanz des Transponders 303 hochtransformieren.

Fig. 3 zeigt ein schematisches Blockschaltbild eines Ausführungsbeispiels einer Anordnung 301 zur Übertragung von Daten über den elektrischen Leiter 307 eines Stromnetzes.

Der elektrische Leiter 307 ist in diesem Fall eine Mittelspannungsleitung. Die in Fig. 3 gezeigte Anordnung dient der Stromnetzüberwachung und insbesondere einer Schalterstellungsdetektion. Zur Überwachung von Schalterstellungen in Mittelspannungsnetzen wird ein Transponder oder Sensor 303 vom Lesegerät 302 aus gesehen hinter einem Schalter 308 angebracht. Lesegerät 302 und Transponder 303 sind über Koppeleinrichtungen 305 an den elektrischen Leiter 307 gekoppelt. Das Lesegerät 302 kann erkennen, ob der Transponder 303 erreichbar ist, wenn der Schalter 308 geschlossen ist, oder nicht erreichbar ist, wenn der Schalter offen ist.

Eine weitere denkbare Anwendung des vorgeschlagenen Verfahrens und der vorgeschlagenen Anordnung erfolgt in einer intelligenten Steckdosenleiste. Eine derartige Steckdosenleiste wird mit einem Lesegerät 302 ausgestattet, alle anzuschließenden Geräte beinhalten einen Transponder 303. Sobald ein Gerät an die Steckdosenleiste angeschlossen wird, liest das Lesegerät 302 den Transponder 303 des Gerätes aus. Die Identifikation des Gerätes erfolgt über eine eindeutige Transponder-ID-Nummer. Dadurch kann die Steckdosenleiste ermitteln, welche Verbraucher angeschlossen sind und beispielsweise auf drohende Überlast reagieren, zum Beispiel durch Übertragen von Steuersignalen zur Abschaltung eines oder mehrerer Geräte.

Weiterhin ist die Verwendung des vorgeschlagenen Verfahrens und der vorgeschlagenen Anordnung in Smart-Home-Anwendungen denkbar, zum Beispiel zur Zeitsteuerung bestimmter starker Verbraucher, damit diese nicht zu Zeiten hoher Netzbelastungen betrieben werden. Die Zeitsteuerung erfolgt beispielsweise durch Übertragung von Steuerdaten durch das Lesegerät 302 zum Ein- und Ausschalten von Geräten.

Eine weitere denkbare Anwendung des vorgeschlagenen Verfahrens und der vorgeschlagenen Anordnung stellt die Steuerung von Hauselektronik dar. Die Steuerung von Komponenten im Haushalt, zum Beispiel Lampendimmer, Klimaanlage oder Heizung, erfolgt von jeder zugänglichen Stelle im selben Stromkreis. Das Lesegerät 302 ist hierbei beispielsweise in einer Klimaanlage eingebaut. Über einen Transponder 303 mit Schalteingängen an einer Steckdose oder in einem Lichtschalter erfolgt die Steuerung.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Übertragung von Daten über einen elektrischen Leiter (307) eines Stromnetzes, an welchen zumindest ein erster Knoten (302) und zumindest ein zweiter Knoten (303) durch eine Koppelung mittels jeweils einer impedanztransparenten Koppeleinrichtung (305) gekoppelt sind, mit den Schritten:
Senden (101) eines Trägersignals über den elektrischen Leiter (307) durch den ersten Knoten (302),
Gleichrichten (102) des gesendeten Trägersignals an dem zweiten Knoten (303) zur Energieversorgung des zweiten Knotens (303),
Modulieren (103) des gesendeten Trägersignals durch den zweiten Knoten (303) mittels einer Lastmodulation zum Übertragen von Antwortdaten an den ersten Knoten (302), und
**dadurch gekennzeichnet, dass** der folgende Verfahrensschritt ausgeführt wird:
Modulieren (103) des gesendeten Trägersignals durch einen weiteren zweiten Knoten mittels einer weiteren Lastmodulation zum Übertragen von weiteren Antwortdaten an den ersten Knoten (302).

2. Verfahren nach Anspruch 1,
**gekennzeichnet durch**:
Demodulieren (104) des mittels der Lastmodulation modulierten Trägersignals **durch** den ersten Knoten (302) zum Empfangen der Antwortdaten.

3. Verfahren nach Anspruch 1 oder 2,
**dadurch gekennzeichnet,**
**dass** eine Entfernung zwischen dem ersten Knoten (302) und dem zweiten Knoten (303) in Abhängigkeit des Empfangens der Antwortdaten ermittelt wird.

4. Verfahren nach einem der Ansprüche 1 bis 3, **gekennzeichnet durch**:
Demodulieren (104) des mittels der weiteren Lastmodulation modulierten Trägersignals **durch** den ersten Knoten (302) zum Empfangen der weiteren Antwortdaten.

5. Verfahren nach einem der Ansprüche 1 bis 4,
**dadurch gekennzeichnet,**
**dass** eine Entfernung zwischen dem zweiten Knoten (303) und dem weiteren zweitenKnoten in Abhängigkeit des Empfangens der Antwortdaten und der weiteren Antwortdaten ermittelt wird.

6. Verfahren nach einem der Ansprüche 1 bis 5,
**dadurch gekennzeichnet,**
**dass** die Lastmodulation und die weitere Lastmodulation durch ein Schalten zwischen verschiedenen Belastungsimpedanzen erfolgen.

7. Verfahren nach einem der Ansprüche 1 bis 6, **gekennzeichnet durch**:
Modulieren des Trägersignals mittels einer Modulation zum Übertragen von Steuerdaten **durch** den ersten Knoten (302).

8. Verfahren nach Anspruch 7,
**gekennzeichnet durch**:
Demodulieren des mittels der Modulation zum Übertragen von Steuerdaten modulierten Trägersignals **durch** den zweiten Knoten (303) zum Empfangen der Steuerdaten.

9. Verfahren nach einem der Ansprüche 1 bis 8,
**dadurch gekennzeichnet, dass**
die Koppelung durch die jeweilige impedanztransparente Koppeleinrichtung (305) an den elektrischen Leiter (307) potentialfrei erfolgt.

10. Verfahren nach einem der Ansprüche 1 bis 9,
**dadurch gekennzeichnet,**
**dass** das Trägersignal zur Unterdrückung von Störsignalen durch die jeweilige impedanztransparente Koppeleinrichtung (305) gefiltert wird.

11. Verfahren nach einem der Ansprüche 1 bis 10,
**dadurch gekennzeichnet,**
**dass** der elektrische Leiter (307) als Hochspannungsleitung oder Höchstspannungsleitung ausgestaltet wird.

12. Verfahren nach einem der Ansprüche 1 bis 11,
**dadurch gekennzeichnet,**
**dass** die Antwortdaten eine Sensorinformation umfassen.

13. Anordnung (301) zur Übertragung von Daten über einen elektrischen Leiter (307) eines Stromnetzes, umfassend einen ersten Knoten (302), einen zweiten Knoten (303) und zumindest einen weiteren zweiten Knoten, wobei der erste Knoten (302), der zweite Knoten (303) und der weitere zweite Knoten durch eine Koppelung mittels jeweils einer impedanztransparenten Koppeleinrichtung (305) an den elektrischen Leiter (307) gekoppelt sind, wobei der erste Knoten (302) ein Sendemittel zum Senden eines Trägersignals über den elektrischen Leiter (307) umfasst, wobei der zweite Knoten (303) ein Gleichrichtungsmittel zum Gleichrichten des gesendeten Trägersignals zur Energieversorgung des zweiten Knotens (303) umfasst, wobei der zweite Knoten (303) ein Modulationsmittel zum Modulieren des gesendeten Trägersignals mittels einer Lastmodulation zum Übertragen von Antwortdaten umfasst, wobei der weitere zweite Knoten ein Gleichrichtungsmittel zum Gleichrichten des gesendeten Trägersignals zur Energieversorgung des weiteren zweiten Knotens umfasst, und
**dadurch gekennzeichnet, dass**
der weitere zweite Knoten ein Modulationsmittel zum Modulieren des gesendeten Trägersignals mittels einer weiteren Lastmodulation zum Übertragen von weiteren Antwortdaten umfasst.

## Claims

1. Method for transmitting data via an electrical conductor (307) of an electricity grid, said electrical conductor having at least one first node (302) and at least one second node (303) coupled to it by coupling by means of a respective impedance-transparent coupling device (305), having the steps of:
transmission (101) of a carrier signal via the electrical conductor (307) by the first node (302),
rectification (102) of the transmitted carrier signal at the second node (303) for the purpose of supplying power to the second node (303),
modulation (103) of the transmitted carrier signal by the second node (303) by means of load modulation for the purpose of transmitting response data to the first node (302), and
**characterized in that** the following method step is carried out:
modulation (103) of the transmitted carrier signal by a further second node by means of further load modulation for the purpose of transmitting further response data to the first node (302).

2. Method according to Claim 1,
**characterized by**:
demodulation (104) of the carrier signal modulated by means of the load modulation by the first node (302) for the purpose of receiving the response data.

3. Method according to Claim 1 or 2,
**characterized**
**in that** a distance between the first node (302) and the second node (303) is ascertained on the basis of the reception of the response data.

4. Method according to one of Claims 1 to 3,
**characterized by**:
demodulation (104) of the carrier signal modulated by means of the further load modulation by the first node (302) for the purpose of receiving the further response data.

5. Method according to one of Claims 1 to 4,
**characterized**
**in that** a distance between the second node (303) and the further second node is ascertained on the basis of the reception of the response data and of the further response data.

6. Method according to one of Claims 1 to 5,
**characterized**
**in that** the load modulation and the further load modulation are effected by switching between different load impedances.

7. Method according to one of Claims 1 to 6,
**characterized by**:
modulation of the carrier signal by means of modulation for the purpose of transmitting control data by the first node (302).

8. Method according to Claim 7,
**characterized by**:
demodulation of the carrier signal modulated by means of the modulation for the purpose of transmitting control data by the second node (303) for the purpose of receiving the control data.

9. Method according to one of Claims 1 to 8,
**characterized in that**
the coupling by the respective impedance-transparent coupling device (305) to the electrical conductor (307) is effected at zero potential.

10. Method according to one of Claims 1 to 9,
**characterized in that** the carrier signal is filtered by the respective impedance-transparent coupling device (305) for the purpose of rejecting interference signals.

11. Method according to one of Claims 1 to 10,
**characterized**
**in that** the electrical conductor (307) is embodied as a high voltage line or maximum voltage line.

12. Method according to one of Claims 1 to 11,
**characterized**
**in that** the response data comprise a piece of sensor information.

13. Arrangement (301) for transmitting data via an electrical conductor (307) of an electricity grid, comprising a first node (302), a second node (303) and at least one further second node, wherein the first node (302), the second node (303) and the further second node are coupled to the electrical conductor (307) by coupling by means of a respective impedance-transparent coupling device (305), wherein the first node (302) comprises a transmission means for transmitting a carrier signal via the electrical conductor (307), wherein the second node (303) comprises a rectification means for rectifying the transmitted carrier signal for the purpose of supplying power to the second node (303), wherein the second node (303) comprises a modulation means for modulating the transmitted carrier signal by means of load modulation for the purpose of transmitting response data, wherein the further second node comprises a rectification means for rectifying the transmitted carrier signal for the purpose of supplying power to the further second node, and **characterized in that** the further second node comprises a modulation means for modulating the transmitted carrier signal by means of further load modulation for the purpose of transmitting further response data.

## Revendications

1. Procédé de transmission de données sur un conducteur électrique (307) d'un réseau électrique auquel sont couplés au moins un premier noeud (302) et au moins un deuxième noeud (303) par un couplage au moyen, respectivement, d'un dispositif de couplage (305) à transparence d'impédance, comportant les étapes suivantes :
- émission (101) d'un signal porteur sur le conducteur électrique (307) par le premier noeud (302) ;
- redressement (102) du signal porteur émis au niveau du deuxième noeud (303) pour l'alimentation en énergie du deuxième noeud (303) ;
- modulation (103) du signal porteur émis par le deuxième noeud (303) au moyen d'une modulation de charge pour la transmission de données de réponse au premier noeud (302),
**caractérisé en ce que** l'étape de procédé suivante est exécutée :
- modulation (103) du signal porteur émis par un autre deuxième noeud au moyen d'une autre modulation de charge pour la transmission d'autres données de réponse au premier noeud (302).

2. Procédé selon la revendication 1, **caractérisé par** la démodulation (104) du signal porteur modulé au moyen de la modulation de charge par le premier noeud (302) pour la réception des données de réponse.

3. Procédé selon la revendication 1 ou 2, **caractérisé en ce qu'**une distance entre le premier noeud (302) et le deuxième noeud (303) est déterminée en fonction de la réception des données de réponse.

4. Procédé selon l'une des revendications 1 à 3, **caractérisé par** la démodulation (104) du signal porteur modulé au moyen de l'autre modulation de charge par le premier noeud (302) pour la réception des autres données de réponse.

5. Procédé selon l'une des revendications 1 à 4, **caractérisé en ce qu'**une distance entre le deuxième noeud (303) et l'autre deuxième noeud est déterminée en fonction de la réception des données de réponse et des autres données de réponse.

6. Procédé selon l'une des revendications 1 à 5, **caractérisé en ce que** la modulation de charge et l'autre modulation de charge ont lieu par commutation entre différentes impédances de charge.

7. Procédé selon l'une des revendications 1 à 6, **caractérisé par** la modulation du signal porteur au moyen d'une modulation pour la transmission de données de commande par le premier noeud (302).

8. Procédé selon la revendication 7, **caractérisé par** la démodulation du signal porteur modulé au moyen de la modulation pour la transmission de données de commande par le deuxième noeud (303) pour la réception des données de commande.

9. Procédé selon l'une des revendications 1 à 8, **caractérisé en ce que** le couplage au conducteur électrique (307) par le dispositif de couplage respectif (305) à transparence d'impédance s'effectue hors potentiel.

10. Procédé selon l'une des revendications 1 à 9, **caractérisé en ce que** le signal porteur est filtré par le dispositif de couplage respectif (305) à transparence d'impédance pour la suppression de signaux parasites.

11. Procédé selon l'une des revendications 1 à 10, **caractérisé en ce que** le conducteur électrique (307) est réalisé en tant que ligne haute tension ou ligne très haute tension.

12. Procédé selon l'une des revendications 1 à 11, **caractérisé en ce que** les données de réponse incluent une information de capteur.

13. Système (301) de transmission de données sur un conducteur électrique (307) d'un réseau électrique, comprenant un premier noeud (302), un deuxième noeud (303) et au moins un autre deuxième noeud, le premier noeud (302), le deuxième noeud (303) et l'autre deuxième noeud étant couplés au conducteur électrique (307) par un couplage au moyen, respectivement, d'un dispositif de couplage (305) à transparence d'impédance, le premier noeud (302) comprenant un moyen d'émission pour émettre un signal porteur sur le conducteur électrique (307), le deuxième noeud (303) comprenant un moyen de redressement pour redresser le signal porteur émis pour l'alimentation en énergie du deuxième noeud (303), le deuxième noeud (303) comprenant un moyen de modulation pour moduler le signal porteur émis au moyen d'une modulation de charge pour la transmission de données de réponse, l'autre deuxième noeud comprenant un moyen de redressement pour redresser le signal porteur émis pour l'alimentation en énergie de l'autre deuxième noeud, **caractérisé en ce que** l'autre deuxième noeud comprend un moyen de modulation pour moduler le signal porteur émis au moyen d'une autre modulation de charge pour la transmission d'autres données de réponse.
